# EUROPEAN PATENT APPLICATION

(11) **EP 3 438 788 A1**
(43) Date of publication of application: **06.02.2019**
(21) Application number: 17773025.6
(22) Date of filing: 10.03.2017
(51) Int. Cl.: G06F 3/01, G10L 15/14, G10L 25/63

(54) **CLOUD-BASED DEVICE AND OPERATING METHOD THEREFOR**

(30) Priority: 31.03.2016 CN 201610200458
(71) Applicant: Shen Zhen Kuang-chi Hezhong Technology Ltd., Shenzhen, Guangdong 518000 (CN)
(72) Inventor: LIU, Ruopeng, Shenzhen Guangdong 518057 (CN); HU, Bin, Shenzhen Guangdong 518057 (CN)
(74) Representative: Goddar, Heinz J.
(86) International application number: PCT/CN2017/076271
(87) International publication number: WO 2017/166994

(57) **Abstract**

This disclosure provides a cloud-based device and an operating method thereof. The device includes an analysis apparatus, where the analysis apparatus includes: a first HMM analyzer, configured to respectively receive a scenario input signal, an audience expression input signal, and an audience voice input signal, use them as observable sequences of a first HMM, and deduce a hidden state change sequence of the first HMM based on an observable sequence probability maximization criterion; an emotional state HMM analyzer, configured to receive the hidden state change sequence of the first HMM, use the hidden state change sequence of the first HMM as an observable sequence of an emotional state HMM, and deduce a hidden state change sequence of the emotional state HMM based on the observable sequence probability maximization criterion; and a voice signal processing unit; and a decision apparatus, configured to receive the hidden state change sequence of the emotional state HMM and a standard instruction, select humorous behavior based on the hidden state change sequence of the emotional state HMM, and consolidate a humorous behavior instruction and the standard instruction to obtain a final output instruction.

## Description

### TECHNICAL FIELD

This disclosure generally relates to a device, and in particular, to a cloud-based device and an operating method thereof.

### BACKGROUND

In an artificial intelligence research field, spontaneous humorous behavior is considered as an ultimate challenge before a machine is really enabled to have human thoughts. Therefore, at the present stage, no technology can enable a machine to have, in the strict sense, a same spontaneous humor feature as humans.

A hidden Markov model (Hidden Markov Model, HMM) is a statistical model used to describe a Markov process (a hidden Markov process) including a hidden unknown parameter. The hidden Markov model was established in the 1970s, and gained propagation and development in the 1980s and became an important direction for signal processing. The hidden Markov model has now been successfully applied to fields such as speech recognition, behavior recognition, text recognition, and fault diagnosis.

The hidden Markov model (HMM) includes two random processes. One is a Markov chain that describes state transition. A specific state sequence is generated, but is hidden, and cannot be observed. The other random process describes a statistical correspondence between a state and an observed value. A specific observable sequence is generated for different states based on probability functions of the states. An observer can view only an observed value but cannot view a state in the Markov chain, and can sense presence of a state and a feature of the state only by using a random process. Therefore, this model is referred to as the hidden Markov model, including the following basic elements:

### 1. Hidden states S

These states satisfy a Markov property, and are states that are actually hidden in the Markov model.

Usually, these states cannot be directly obtained by observation (for example, S1, S2, and S3).

### 2. Observable states O

The observable states are associated with the hidden states in the model, and can be directly obtained by observation (for example, O1, O2, and O3, and a quantity of observable states is not necessarily consistent with a quantity of hidden states).

### 3. Initial state probability matrix π

The initial state probability matrix π indicates a probability matrix of the hidden states at an initial time point t = 1 (for example, when t = 1, P(S1) = p1, P(S2) = P2, P(S3) = p3, and the initial state probability matrix π = [p1 p2 p3]).

### 4. Hidden state transition probability matrix A

The hidden state transition probability matrix A describes a probability of transition between states in the HMM.

Aij = P(Sj|Si), where 1 ≤ i, and j ≤ N. This indicates a probability that a state at a t + 1 time point is Sj under a condition that a state at a t time point is Si.

### 5. Observable state transition probability matrix B (also referred to as a confusion matrix)

N is used to represent the quantity of hidden states, and M is used to represent a quantity of observable states. Then,
Bij = P(Oi|Sj), where 1 ≤ i ≤ M, and 1 ≤ j ≤ N.

This indicates a probability of an observable state Oi under a condition that a hidden state at the t time point is Sj.

Generally, a triplet λ = (A, B, π) is used to briefly represent a hidden Markov model.

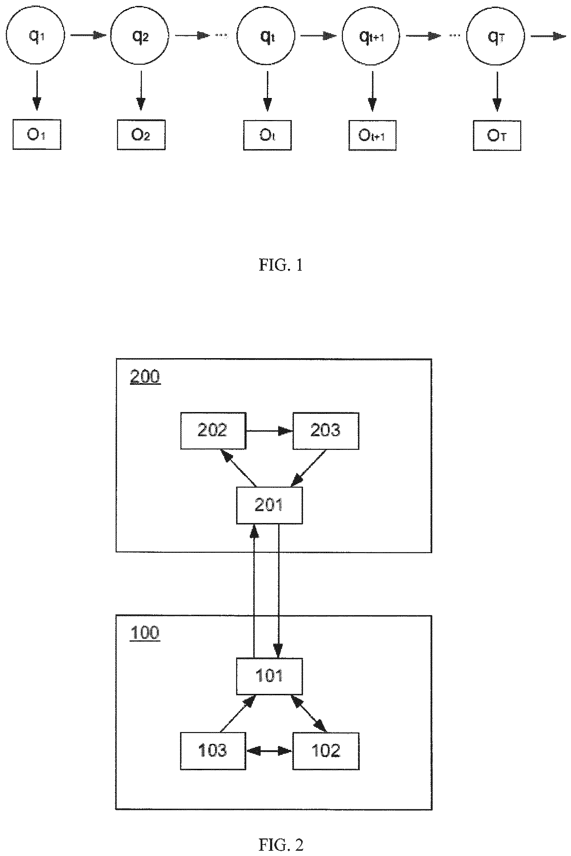

The HMM may be shown in FIG. 1 in this specification. An arrow between nodes represents a conditional probability relationship between two states. In FIG. 1, a square node represents an observation node of a coupled chain, and a circular node represents a hidden node of the coupled chain.

### SUMMARY

The following provides brief descriptions of one or more aspects, to provide basic understanding of a plurality of aspects of this disclosure. However, it should be noted that the following descriptions are not detailed descriptions of all aspects that are figured out, are not intended to describe key or decisive elements of all aspects of this disclosure, and do not attempt to limit the scope of any or all aspects of this disclosure. Contrarily, an only objective of the following descriptions is to provide some concepts of one or more aspects of this disclosure in a simplified form, and use the concepts as a preface of specific implementations described below.

An objective of this disclosure is not to develop a corresponding technology to make an agent intellectual and have a humor feature, but to use a cloud technology and a machine learning technology to make an agent have some preset humorous behavior features during interaction with a target audience. This further improves an intelligence feature of a companion robot, to achieve an objective of pleasing a target audience.

According to an aspect of this disclosure, this disclosure provides a cloud-based device.

According to an aspect of this disclosure, the cloud-based device includes: an analysis apparatus, where the analysis apparatus includes: a first HMM analyzer, configured to respectively receive a scenario input signal, an audience expression input signal, and an audience voice input signal, use them as observable sequences of a first HMM, and deduce a hidden state change sequence of the first HMM based on an observable sequence probability maximization criterion, where the hidden state change sequence of the first HMM includes a scenario hidden state change sequence, an audience expression hidden state change sequence, and an audience voice hidden state change sequence; an emotional state HMM analyzer, configured to receive the scenario hidden state change sequence, the audience expression hidden state change sequence, and the audience voice hidden state change sequence, use them as observable sequences of an emotional state HMM, and deduce a hidden state change sequence of the emotional state HMM based on the observable sequence probability maximization criterion; and a voice signal processing unit, configured to identify the audience voice input signal, and output a standard instruction based on an identification result; and a decision apparatus, configured to receive the hidden state change sequence of the emotional state HMM and the standard instruction, select humorous behavior based on the hidden state change sequence of the emotional state HMM, and consolidate a humorous behavior instruction and the standard instruction to obtain a final output instruction.

According to an aspect of this disclosure, the first HMM analyzer further includes a scenario HMM analyzer, an audience expression HMM analyzer, and an audience voice HMM analyzer, and the scenario HMM analyzer, the audience expression HMM analyzer, and the audience voice HMM analyzer are connected in a series or parallel manner.

According to an aspect of this disclosure, the decision apparatus includes: a humorous behavior selection unit, configured to perform probability analysis on the hidden state change sequence of the emotional state HMM, select the humorous behavior, and send the humorous behavior instruction; and a consolidation unit, configured to consolidate the humorous behavior instruction and the standard instruction to obtain the final output instruction, where an output end of the emotional state HMM analyzer is connected to an input end of the humorous behavior selection unit, an output end of the humorous behavior selection unit is connected to an input end of the consolidation unit, and an output end of the voice signal processing unit is connected to the input end of the consolidation unit.

According to an aspect of this disclosure, the consolidation includes: when the humorous behavior instruction is "error feedback", the consolidation unit modifies the standard instruction based on the humorous behavior instruction, to be specific, the standard instruction is not executed, and the consolidation unit selects some other performances by searching a cloud database and/or accessing the Internet with reference to the audience voice input signal, to express a sense of humor.

According to an aspect of this disclosure, the consolidation further includes: when the humorous behavior instruction is one of "telling a joke", "reading interesting news", "performing a funny action", and "singing", the consolidation unit selects an optimal humor output instruction by searching a cloud database and/or accessing the Internet with reference to the audience voice input signal, and uses the optimal humor output instruction and the standard instruction as the final output instruction, where the optimal humor output instruction is an instruction most matching an emotional state of a target audience.

According to an aspect of this disclosure, a related policy for selecting the humorous behavior and the optimal humor output instruction is correspondingly adjusted by using feedback information obtained based on continuous interaction with the target audience.

According to an aspect of this disclosure, the database includes a joke database, a news database, an action database, and a song database.

According to an aspect of this disclosure, the probability analysis includes: calculating, by the humorous behavior selection unit, humorous behavior set probability distribution by using a preset probability transition matrix from an emotional state to a humorous behavior set.

According to an aspect of this disclosure, the humorous behavior set includes {m1: "telling a joke", m2: "reading interesting news", m3: "performing a funny action", m4: "singing", m5: "error feedback"}, and the m5: "error feedback" means making an audience happy by deliberately outputting error feedback.

According to an aspect of this disclosure, deducing the hidden state change sequence based on the observable sequence probability maximization criterion is implemented by using a Viterbi algorithm.

According to an aspect of this disclosure, an output end of the first HMM analyzer is connected to an input end of the emotional state HMM analyzer.

According to an aspect of this disclosure, one or more of output ends of the scenario HMM analyzer, the audience expression HMM analyzer, and the audience voice HMM analyzer are connected to an input end of the emotional state HMM analyzer.

According to an aspect of this disclosure, an output end of the analysis apparatus is connected to an input end of the decision apparatus.

According to an aspect of this disclosure, the device further includes a first transceiver, an output end of the first transceiver is connected to an input end of the analysis apparatus, and an output end of the decision apparatus is connected to an input end of the first transceiver.

According to an aspect of this disclosure, the output end of the first transceiver is connected to an input end of the first HMM analyzer and an input end of the voice signal processing unit.

According to an aspect of this disclosure, the output end of the first transceiver is connected to one or more of input ends of the scenario HMM analyzer, the audience expression HMM analyzer, and the audience voice HMM analyzer and an input end of the voice signal processing unit.

According to an aspect of this disclosure, the first transceiver is in a communications connection to a second transceiver of a robot.

According to an aspect of this disclosure, this disclosure provides an operating method of a cloud-based device.

According to an aspect of this disclosure, the method includes: receiving, by using a first transceiver in the device, input data coming from a second transceiver of a robot; receiving an audience voice input signal from the first transceiver in the device by using a voice signal processing unit in an analysis apparatus in the device, identifying the audience voice input signal, and outputting a standard instruction based on an identification result; respectively receiving, by using a first HMM analyzer in the analysis apparatus in the device, a scenario input signal, an audience expression input signal, and an audience voice input signal that come from the first transceiver in the device, and using them as observable sequences of a first HMM; deducing, by the first HMM analyzer, a hidden state change sequence of the first HMM based on an observable sequence probability maximization criterion, and outputting the hidden state change sequence to an emotional state HMM analyzer in the analysis apparatus, where the hidden state change sequence of the first HMM includes a scenario hidden state change sequence, an audience expression hidden state change sequence, and an audience voice hidden state change sequence; receiving, by the emotional state HMM analyzer, the scenario hidden state change sequence, the audience expression hidden state change sequence, and the audience voice hidden state change sequence, using them as observable sequences of an emotional state HMM, and deducing a hidden state change sequence of the emotional state HMM based on the observable sequence probability maximization criterion; and selecting, by a decision apparatus in the device, humorous behavior based on the hidden state change sequence of the emotional state HMM, and consolidating a humorous behavior instruction and the standard instruction to obtain a final output instruction.

According to an aspect of this disclosure, the first HMM analyzer further includes a scenario HMM analyzer, an audience expression HMM analyzer, and an audience voice HMM analyzer that are connected in a series or parallel manner, where the scenario HMM analyzer, the audience expression HMM analyzer, and the audience voice HMM analyzer respectively receive a scenario input signal, an audience expression input signal, and an audience voice input signal; use them as observable sequences of a scenario HMM, an audience expression HMM, and an audience voice HMM; deduce hidden state change sequences of the scenario HMM, the audience expression HMM, and the audience voice HMM based on the observable sequence probability maximization criterion; and send the hidden state change sequences of the scenario HMM, the audience expression HMM, and the audience voice HMM to the emotional state HMM analyzer.

According to an aspect of this disclosure, the step of selecting, by a decision apparatus in the device, humorous behavior based on the hidden state change sequence of the emotional state HMM, and consolidating a humorous behavior instruction and the standard instruction to obtain a final output instruction includes: receiving, by a humorous behavior selection unit in the decision apparatus in the device, the hidden state change sequence of the emotional state HMM, performing probability analysis on the received hidden state change sequence of the emotional state HMM, selecting the humorous behavior, and outputting the humorous behavior instruction to a consolidation unit in the decision apparatus; and receiving, by the consolidation unit, the humorous behavior instruction and the standard instruction, and consolidating the humorous behavior instruction and the standard instruction to obtain the final output instruction.

According to an aspect of this disclosure, the consolidation includes: when the humorous behavior instruction is "error feedback", the consolidation unit modifies the standard instruction based on the humorous behavior instruction, to be specific, the standard instruction is not executed, and the consolidation unit selects some other performances by searching a cloud database and/or accessing the Internet with reference to the audience voice input signal, to express a sense of humor.

According to an aspect of this disclosure, the consolidation further includes: when the humorous behavior instruction is one of "telling a joke", "reading interesting news", "performing a funny action", and "singing", the consolidation unit selects an optimal humor output instruction by searching a cloud database and/or accessing the Internet with reference to the audience voice input signal, and uses the optimal humor output instruction and the standard instruction as the final output instruction, where the optimal humor output instruction is an instruction most matching an emotional state of a target audience.

According to an aspect of this disclosure, a related policy for selecting the humorous behavior and the optimal humor output instruction is correspondingly adjusted by using feedback information obtained based on continuous interaction with the target audience.

According to an aspect of this disclosure, the database includes a joke database, a news database, an action database, and a song database.

According to an aspect of this disclosure, the probability analysis includes: calculating, by the humorous behavior selection unit, humorous behavior set probability distribution by using a preset probability transition matrix from an emotional state to a humorous behavior set.

According to an aspect of this disclosure, the humorous behavior set includes {m1: "telling a joke", m2: "reading interesting news", m3: "performing a funny action", m4: "singing", m5: "error feedback"}, and the m5: "error feedback" means making an audience happy by deliberately outputting error feedback.

According to an aspect of this disclosure, deducing the hidden state change sequence based on the observable sequence probability maximization criterion is implemented by using a Viterbi algorithm.

### BRIEF DESCRIPTION OF DRAWINGS

After detailed descriptions of the embodiments of this disclosure are read with reference to the following drawings, the foregoing features and advantages of this disclosure can be better understood. In the drawings, components are not necessarily drawn proportionally, and components having similar related characteristics or features may be represented by a same or similar sign in the drawings. For ease of description, an "interactive robot" is referred to as a "robot" for short in the following descriptions.
FIG. 1 is a schematic diagram of an HMM;
FIG. 2 is a schematic structural diagram of interaction between a cloud-based device and a robot according to an embodiment of this disclosure;
FIG. 3A to FIG. 3C are schematic structural diagrams of an analysis apparatus of a cloud-based device according to an embodiment of this disclosure; and
FIG. 4 is a schematic structural diagram of a decision apparatus of a cloud-based device according to an embodiment of this disclosure.

### DESCRIPTION OF EMBODIMENTS

The following describes this disclosure in detail with reference to drawings and specific embodiments. Note that the following aspects described with reference to the drawings and the specific embodiments are merely examples, and should not be understood as any limitation on the protection scope of this disclosure.

FIG. 2 is a schematic structural diagram of interaction between a cloud-based device 200 and a robot 100 according to an embodiment of this disclosure. In FIG. 2, the robot 100 includes a transceiver 101, a control apparatus 102, and a sensor apparatus 103. The cloud-based device 200 includes a transceiver 201, an analysis apparatus 202, and a decision apparatus 203. As shown in FIG. 2, the transceiver 101 of the robot 100 is in a communications connection to the transceiver 201 of the cloud-based device 200. Further, the transceiver 101 and the sensor apparatus 103 of the robot 100 are respectively in interactive connections to the control apparatus 102, and the sensor apparatus 103 is connected to the transceiver 101. Further, the transceiver 201 of the cloud-based device 200 is connected to the analysis apparatus 202, the analysis apparatus 202 is connected to the decision apparatus 203 of the cloud-based device 200, and the decision apparatus 203 is connected to the transceiver 201 of the cloud-based device 200.

According to some embodiments of this disclosure, the sensor apparatus 103 of the robot 100 may include an image sensor and a voice sensor. The image sensor is configured to collect an image signal in a scenario in which a target audience is located and an expression image signal of the target audience. The voice sensor is configured to collect a voice signal of the target audience. As shown in FIG. 2, the sensor apparatus 103 transmits, by using the transceiver 101, collected information to the cloud-based device 200. In addition, the cloud-based device 200 receives, by using the transceiver 201, input information coming from the robot 100.

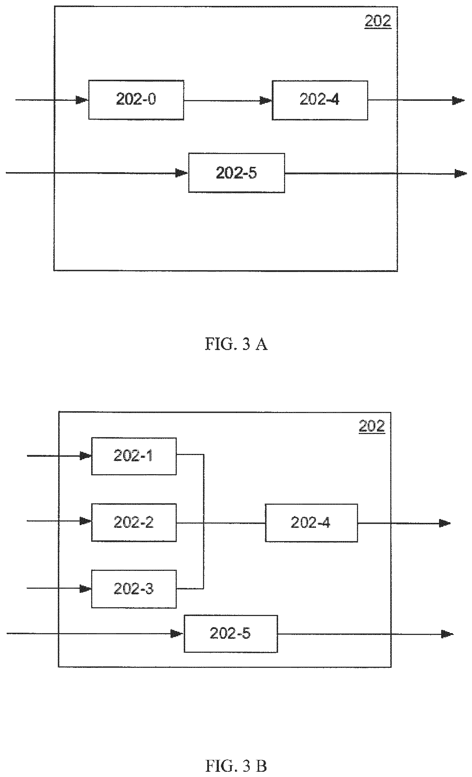

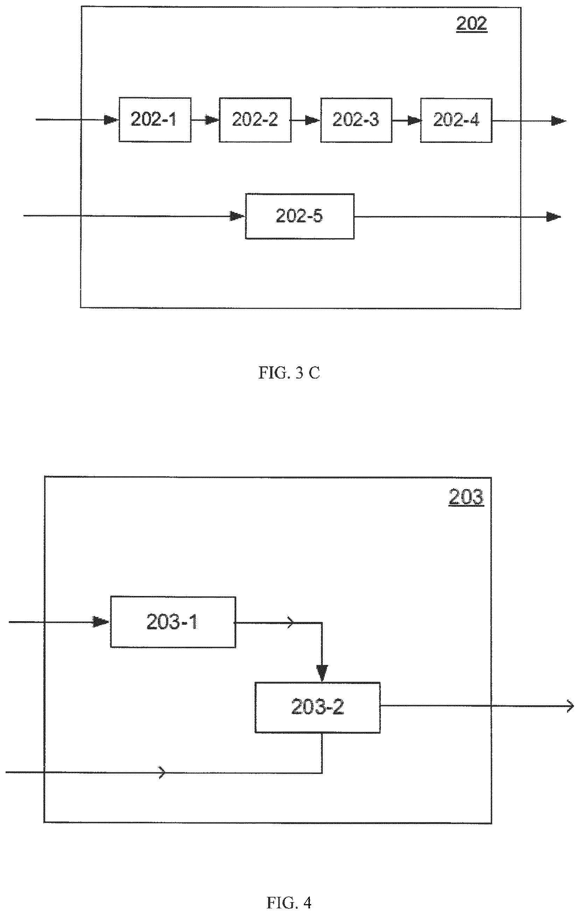

FIG. 3A to FIG. 3C are schematic structural diagrams of the analysis apparatus 202 of the cloud-based device 200 according to an embodiment of this disclosure. In FIG. 3A, the analysis apparatus 202 of the cloud-based device 200 includes a first HMM analyzer 202-0, an emotional state HMM analyzer 202-4, and a voice signal processing unit 202-5. In FIG. 3B and FIG. 3C, the first HMM analyzer 202-0 may further include a scenario HMM analyzer 202-1, an audience expression HMM analyzer 202-2, and an audience voice HMM analyzer 202-3. In FIG. 3B, the scenario HMM analyzer 202-1, the audience expression HMM analyzer 202-2, and the audience voice HMM analyzer 202-3 are connected in a parallel manner. In FIG. 3C, the scenario HMM analyzer 202-1, the audience expression HMM analyzer 202-2, and the audience voice HMM analyzer 202-3 are connected in a series manner. Herein, it should be noted that this disclosure is not limited to the connection manners shown in the drawings. For example, two of the scenario HMM analyzer 202-1, the audience expression HMM analyzer 202-2, and the audience voice HMM analyzer 202-3 are connected in series and then connected to a remaining one in parallel; or two of them are connected in parallel and then connected to a remaining one in series. Different connection manners and connection sequence changes of the three HMM analyzers fall within the protection scope of this disclosure.

With reference to FIG. 2 and FIG. 3A to FIG. 3C, the sensor apparatus 103 of the robot 100 collects input data once every other unit time, and transmits, by using the transceiver 101 and the transceiver 201, data collected in 20 consecutive unit times to the analysis apparatus 202 of the cloud-based device 200. The first HMM analyzer 202-0, or the scenario HMM analyzer 202-1, the audience expression HMM analyzer 202-2, and the audience voice HMM analyzer 202-3, in the analysis apparatus 202, respectively receives/receive a scenario input signal, an audience expression input signal, and an audience voice input signal that come from the transceiver 201. Herein, 20 scenario input signals, audience expression input signals, and audience voice input signals that are received by the first HMM analyzer 202-0, or the scenario HMM analyzer 202-1, the audience expression HMM analyzer 202-2, and the audience voice HMM analyzer 202-3, from the transceiver 201 are respectively corresponding observable sequences of a first HMM, or a scenario HMM, an audience expression HMM, and an audience voice HMM. The first HMM is a generic HMM established for a scenario input signal, an audience expression input signal, and an audience voice input signal. The scenario HMM, the audience expression HMM, and the audience voice HMM are respectively HMMs established for a scenario input signal, an audience expression input signal, and an audience voice input signal.

In some embodiments, hidden states for the scenario HMM include a coast, a forest, a desert, a mountain, a swimming pool, a kitchen, a bathroom, a living room, a bedroom, and the like; and hidden states for the audience expression HMM include interested, glad, surprised, sad, scared, shy, contemptuous, angry, and the like. In some embodiments, for the audience voice HMM, the 20 audience voice input signals received by the audience voice HMM analyzer are observable sequences of the audience voice HMM, and how each audience voice input signal changes to a next audience voice input signal, namely, a dynamic characteristic of a short-time statistical feature, is a hidden state of the audience voice HMM.

Still referring to FIG. 2 and FIG. 3A to FIG. 3C, for observable sequences of corresponding HMMs, the first HMM analyzer 202-0, the scenario HMM analyzer 202-1, the audience expression HMM analyzer 202-2, and the audience voice HMM analyzer 202-3 deduce corresponding hidden state changes based on an observable sequence probability maximization criterion.

Referring to FIG. 2 and FIG. 3A to FIG. 3C, the analysis apparatus 202 of the cloud-based device 200 further includes the emotional state HMM analyzer 202-4. The first HMM analyzer, or one or more of the scenario HMM analyzer 202-1, the audience expression HMM analyzer 202-2, and the audience voice HMM analyzer 202-3, in the analysis apparatus 202 is/are connected to the emotional state HMM analyzer 202-4, and a hidden state change sequence obtained by analysis is output to the emotional state HMM analyzer 202-4 and is used as an observable sequence of the emotional state HMM analyzer 202-4. Likewise, a hidden state change sequence of an emotional state HMM is deduced based on the observable sequence probability maximization criterion.

In some embodiments, hidden states for the emotional state HMM include angry, annoyed, resentful, aggrieved, agitated, hostile, distressed, depressed, gloomy, self-pitying, lonely, discouraged, desperate, seriously depressed, anxious, terrified, nervous, concerned, panic, worried, alert, doubtful, pathologically scared, pathologically panic, relieved, satisfied, happy, delighted, interested, proud, sensually pleased, excited, ecstatic, maniac, appreciative, friendly, reliant, kind, intimate, affectionate, fond, obsessed, shocked, astonished, surprised, breathtaking, disrespectful, contemptuous, sarcastic, repellent, guilty, awkward, regretful, humiliated, and the like.

In some embodiments, deducing a hidden state change based on the observable sequence probability maximization criterion is implemented by using a Viterbi algorithm (Viterbi Algorithm). The Viterbi algorithm provides an effective calculation method for analyzing an observable sequence of a hidden Markov model and obtaining a most possible hidden state change sequence.

Still referring to FIG. 3A to FIG. 3C, the analysis apparatus 202 of the cloud-based device 200 further includes the voice signal processing unit 202-5. The voice signal processing unit 202-5 receives the audience voice input signal from the transceiver 201, identifies the audience voice input signal, and outputs a standard instruction to the decision apparatus 203 based on an identification result.

FIG. 4 is a schematic structural diagram of the decision apparatus 203 of the cloud-based device 200 according to an embodiment of this disclosure. In FIG. 4, the decision apparatus 203 includes a humorous behavior selection unit 203-1 and a consolidation unit 203-2. With reference to FIG. 3A to FIG. 3C and FIG. 4, an output end of the voice signal processing unit 202-5 in the analysis apparatus 202 is connected to an input end of the consolidation unit 203-2 in the decision apparatus 203, an output end of the emotional state HMM analyzer 202-4 is connected to an input end of the humorous behavior selection unit 203-1 in the decision apparatus 203, an output end of the humorous behavior selection unit 203-1 is connected to an input end of the consolidation unit 203-2, and an output end of the consolidation unit 203-2 is connected to an input end of the transceiver 201.

Referring to FIG. 3A to FIG. 3C and FIG. 4, the humorous behavior selection unit 203-1 in the decision apparatus 203 receives output that comes from the emotional state HMM analyzer 202-4 in the analysis apparatus 202. Because the hidden Markov model is used, audience emotional states obtained by the emotional state HMM analyzer 202-4 by analysis are in probability state distribution. The humorous behavior selection unit 203-1 performs probability analysis on the received audience emotional state probability distribution. Specifically, humorous behavior set probability distribution is calculated by using a preset probability transition matrix from an emotional state to an output humorous behavior set, and an output instruction is randomly sampled based on the probability distribution and is used as a final humor instruction type. In an embodiment, the Monte Carlo method may be used for random sampling. The Monte Carlo method is a method for performing sampling based on generated distribution to make a sampling result conform to the distribution. Therefore, sampling by using the Monte Carlo method can ensure variability of output. Considering a degree of implementation difficult of robot behavior in a practical scenario, the final output instruction is divided into a standard feedback instruction and additional humorous behavior. Herein, the humorous behavior set may include {m1: "telling a joke", m2: "reading interesting news", m3: "performing a funny action", m4: "singing", m5: "error feedback"}. The humorous behavior selection unit 203-1 sends a selected humorous behavior instruction to the consolidation unit 203-2. In the consolidation unit 203-2, the humorous behavior instruction received from the humorous behavior selection unit 203-1 is consolidated with the standard instruction received from the voice signal processing unit 202-5. Then the transceiver 201 outputs the final output instruction to the robot 100.

In the humorous behavior set, the m5: "error feedback" means making an audience happy by deliberately outputting error feedback. For example, when the audience initiates a "come here" instruction to the robot, a standard feedback instruction is to command the robot to approach the target audience. If humorous behavior selected by the humorous behavior selection unit 203-1 is the "error feedback", standard feedback may not be executed, and the consolidation unit 203-2 selects some other performances by searching a cloud database and/or accessing the Internet with reference to an audience voice input signal, to express a sense of humor. For example, the robot pretends to be angry and says "A nobleman like me is not to be bossed around." For other humorous behavior, the consolidation unit 203-2 selects, by searching the cloud database with reference to an audience voice input signal, an optimal humor output instruction most matching a current emotional state of the audience. In addition, because of selection of some specific content, required information further needs to be obtained by accessing the Internet. For example, if humorous behavior is the "telling a joke", a most matching joke in the joke database needs to be selected with reference to an emotional state of the audience. Herein, the voice signal processing unit 202-5 may send the audience voice input signal to the consolidation unit 203-2. Alternatively, the consolidation unit 203-2 may directly receive the audience voice input signal from the transceiver 201.

In some embodiments, a related policy for selection of all these humorous behavior types and content matching may be correspondingly adjusted based on feedback information obtained based on continuous interaction with the target audience, to implement an effect of "enhanced learning" and finally implement an interactive robot that cooperates "tacitly" with the target audience and has a specific humor characteristic.

According to an aspect of this disclosure, this disclosure provides a cloud-based device, and an operating method thereof is as follows:
In a first step, a transceiver of the cloud-based device receives input data coming from a transceiver of a robot, where the input data coming from the transceiver of the robot is collected by a sensor apparatus of the robot in 20 consecutive unit times.

In a second step, a voice signal processing unit in an analysis apparatus of the cloud-based device receives an audience voice input signal from the transceiver of the cloud-based device, identifies the audience voice input signal, and outputs a standard instruction to a consolidation unit in a decision apparatus of the cloud-based device based on an identification result.

In a third step, a first HMM analyzer in the analysis apparatus of the cloud-based device respectively receives a scenario input signal, an audience expression input signal, and an audience voice input signal that come from the transceiver in the device, and uses them as observable sequences of a first HMM. The first HMM analyzer deduces a hidden state change sequence of the first HMM based on an observable sequence probability maximization criterion, and outputs the hidden state change sequence to an emotional state HMM analyzer in the analysis apparatus of the cloud-based device, where the hidden state change sequence of the first HMM includes a scenario hidden state change sequence, an audience expression hidden state change sequence, and an audience voice hidden state change sequence.

When the first HMM analyzer includes a scenario HMM analyzer, an audience expression HMM analyzer, and an audience voice HMM analyzer that are connected in a series or parallel manner, the scenario HMM analyzer, the audience expression HMM analyzer, and the audience voice HMM analyzer respectively receive the scenario input signal, the audience expression input signal, and the audience voice input signal that come from the transceiver of the cloud-based device, where these input signals are respectively observable sequences of corresponding HMMs. For the observable sequences of the corresponding HMMs, the scenario HMM analyzer, the audience expression HMM analyzer, and the audience voice HMM analyzer deduce corresponding hidden state change sequences based on the observable sequence probability maximization criterion, and output these hidden state change sequences to the emotional state HMM analyzer in the analysis apparatus of the cloud-based device.

In a fourth step, the emotional state HMM analyzer in the analysis apparatus of the cloud-based device receives the hidden state change sequences that come from the first HMM analyzer, or the scenario HMM analyzer, the audience expression HMM analyzer, and the audience voice HMM analyzer, uses them as observable sequences of the emotional state HMM analyzer, and deduces a hidden state change sequence of an emotional state HMM based on the observable sequence probability maximization criterion.

In a fifth step, a humorous behavior selection unit in the decision apparatus of the cloud-based device receives output coming from the emotional state HMM analyzer in the analysis apparatus, calculates humorous behavior set probability distribution by using a preset probability transition matrix from an emotional state to a humorous behavior set, performs random sampling on an output instruction based on the probability distribution, uses the output instruction as a final humor instruction type, and sends a selected humorous behavior instruction to a consolidation unit.

In a sixth step, the consolidation unit consolidates the humorous behavior instruction received from the humorous behavior selection unit and the standard instruction received from the voice signal processing unit, and outputs the final output instruction to the robot by using the transceiver. For a humorous behavior instruction "error feedback", the consolidation unit modifies the standard instruction based on the humorous behavior instruction. Specifically, the standard instruction is not executed, and the consolidation unit selects some other performances by searching a cloud database and/or accessing the Internet with reference to the audience voice input signal, to express a sense of humor. For humorous behavior instructions "telling a joke", "reading interesting news", "performing a funny action", and "singing", the consolidation unit selects an optimal humor output instruction by searching the cloud database and/or accessing the Internet with reference to the audience voice input signal, uses the optimal humor output instruction and the standard instruction as the final output instruction, and outputs the final output instruction to the robot by using the transceiver, where the optimal humor output instruction is an instruction most matching an emotional state of a target audience, and the database includes a joke database, a news database, an action database, and a song database.

Herein, it should be noted that the second step and the third step are performed simultaneously, and there is no particular order.

The foregoing describes the plurality of aspects of this disclosure based on the embodiments of this disclosure. It should be understood that the foregoing embodiments are merely examples and constitute no limitation. In addition, the foregoing plurality of embodiments may be combined to form a new alternative embodiment, or only a subset of one embodiment may be executed to implement this disclosure.

It is further learned by a person skilled in the art that the illustrative logical blocks, modules, circuits, and algorithm steps described with reference to the embodiments disclosed in this specification may be implemented as electronic hardware, computer software, or a combination thereof. To clearly describe interchangeability between hardware and software, the illustrative components, blocks, modules, circuits, and steps in the foregoing descriptions are generally described in a form of functionality. Whether such functionality is implemented as hardware or software depends on specific applications and design constraints imposed on an entire system. A person skilled in the art may use different manners to implement the described functionality for each particular application. However, such implementation decision should not be considered as beyond the scope of this disclosure.

The illustrative logical modules and circuits described with reference to the embodiments disclosed in this specification may be implemented or executed by using a general-purpose processor, a digital signal processor (DSP), an application-specific integrated circuit (ASIC), a field programmable gate array (FPGA) or another programmable logic device, a discrete gate or transistor logic, a discrete hardware component, or any combination designed to execute the functions described in this specification. The general-purpose processor may be a microprocessor. However, in an alternative solution, the processor may be any conventional processor, controller, microcontroller, or state machine. The processor may alternatively be implemented as a combination of computing devices, for example, a combination of a DSP and a microprocessor, a plurality of microprocessors, one or more microprocessors collaborating with a DSP core, or any other configuration of this type.

The method or algorithm steps described with reference to the embodiments disclosed in this specification may be directly embodied in hardware, a software module executed by a processor, or a combination thereof. The software module may reside in a RAM, a flash memory, a ROM, an EPROM, an EEPROM, a register, a hard disk, a removable disk, a CD-ROM, or any other form of storage medium known in the art. For example, the storage medium is coupled with the processor, so that the processor can read and write information from/to the storage medium. In an alternative solution, the storage medium may be integrated into the processor. The processor and the storage medium may reside in an ASIC. The ASIC may reside in a user terminal. In an alternative solution, the processor and the storage medium may reside in a user terminal as discrete components.

In one or more example embodiments, the described functions may be implemented in hardware, software, firmware, or any combination thereof. If the functions are implemented in the software as a computer program product, the functions may be stored in a computer-readable medium as one or more pieces of instructions or code, or transmitted by the computer-readable medium. The computer-readable medium includes a computer storage medium and a communications medium, and includes any medium that enables a computer program to be transferred from one place to another place. The storage medium may be any available medium that can be accessed by a computer. In an example, not as a limitation, such a computer-readable medium may include a RAM, a ROM, an EEPROM, a CD-ROM or another optical disc storage, a disk storage or another disk storage device, or any other medium that can be used to carry or store an instruction or desirable program code in a form of a data structure and that can be accessed by a computer. Any connection is also properly referred to as a computer-readable medium.

The foregoing descriptions provided for this disclosure are to make any person skilled in the art be able to fabricate or use this disclosure. Various modifications to this disclosure are obvious to a person skilled in the art, and universal principles defined in this specification can be applied to other variations without departing from the spirit or scope of this disclosure. Therefore, this disclosure is not intended to be limited to the examples and designs described in this specification, but should be granted a widest scope consistent with the principles and novel features disclosed in this specification.

## Claims

1. Cloud-based device, comprising:
an analysis apparatus, wherein the analysis apparatus comprises:
a first HMM analyzer, configured to respectively receive a scenario input signal, an audience expression input signal, and an audience voice input signal, use them as observable sequences of a first HMM, and deduce a hidden state change sequence of the first HMM based on an observable sequence probability maximization criterion, wherein the hidden state change sequence of the first HMM comprises a scenario hidden state change sequence, an audience expression hidden state change sequence, and an audience voice hidden state change sequence;
an emotional state HMM analyzer, configured to receive the scenario hidden state change sequence, the audience expression hidden state change sequence, and the audience voice hidden state change sequence, use them as observable sequences of an emotional state HMM, and deduce a hidden state change sequence of the emotional state HMM based on the observable sequence probability maximization criterion; and
a voice signal processing unit, configured to identify the audience voice input signal, and output a standard instruction based on an identification result; and
a decision apparatus, configured to receive the hidden state change sequence of the emotional state HMM and the standard instruction, select humorous behavior based on the hidden state change sequence of the emotional state HMM, and consolidate a humorous behavior instruction and the standard instruction to obtain a final output instruction.

2. The cloud-based device according to claim 1, wherein the first HMM analyzer further comprises a scenario HMM analyzer, an audience expression HMM analyzer, and an audience voice HMM analyzer, and the scenario HMM analyzer, the audience expression HMM analyzer, and the audience voice HMM analyzer are connected in a series or parallel manner.

3. The cloud-based device according to claim 1 or 2, wherein the decision apparatus comprises:
a humorous behavior selection unit, configured to perform probability analysis on the hidden state change sequence of the emotional state HMM, select the humorous behavior, and send the humorous behavior instruction; and
a consolidation unit, configured to consolidate the humorous behavior instruction and the standard instruction to obtain the final output instruction, wherein
an output end of the emotional state HMM analyzer is connected to an input end of the humorous behavior selection unit, an output end of the humorous behavior selection unit is connected to an input end of the consolidation unit, and an output end of the voice signal processing unit is connected to the input end of the consolidation unit.

4. The cloud-based device according to claim 3, wherein the consolidation comprises:
when the humorous behavior instruction is "error feedback", the consolidation unit modifies the standard instruction based on the humorous behavior instruction, to be specific, the standard instruction is not executed, and the consolidation unit selects some other performances by searching a cloud database and/or accessing the Internet with reference to the audience voice input signal, to express a sense of humor.

5. The cloud-based device according to claim 3, wherein the consolidation further comprises:
when the humorous behavior instruction is one of "telling a joke", "reading interesting news", "performing a funny action", and "singing", the consolidation unit selects an optimal humor output instruction by searching a cloud database and/or accessing the Internet with reference to the audience voice input signal, and uses the optimal humor output instruction and the standard instruction as the final output instruction, wherein the optimal humor output instruction is an instruction most matching an emotional state of a target audience.

6. The cloud-based device according to claim 5, wherein a related policy for selecting the humorous behavior and the optimal humor output instruction is correspondingly adjusted by using feedback information obtained based on continuous interaction with the target audience.

7. The cloud-based device according to claim 4 or 5, wherein the database comprises a joke database, a news database, an action database, and a song database.

8. The cloud-based device according to claim 3, wherein the probability analysis comprises: calculating, by the humorous behavior selection unit, humorous behavior set probability distribution by using a preset probability transition matrix from an emotional state to a humorous behavior set.

9. The cloud-based device according to claim 8, wherein the humorous behavior set comprises {m1: "telling a joke", m2: "reading interesting news", m3: "performing a funny action", m4: "singing", m5: "error feedback"}, and the m5: "error feedback" means making an audience happy by deliberately outputting error feedback.

10. The cloud-based device according to claim 1 or 2, wherein deducing the hidden state change sequence based on the observable sequence probability maximization criterion is implemented by using a Viterbi algorithm.

11. The cloud-based device according to claim 1, wherein an output end of the first HMM analyzer is connected to an input end of the emotional state HMM analyzer.

12. The cloud-based device according to claim 2, wherein one or more of output ends of the scenario HMM analyzer, the audience expression HMM analyzer, and the audience voice HMM analyzer are connected to an input end of the emotional state HMM analyzer.

13. The cloud-based device according to claim 1 or 2, wherein an output end of the analysis apparatus is connected to an input end of the decision apparatus.

14. The cloud-based device according to claim 1 or 2, wherein the device further comprises a first transceiver, an output end of the first transceiver is connected to an input end of the analysis apparatus, and an output end of the decision apparatus is connected to an input end of the first transceiver.

15. The cloud-based device according to claim 14, wherein the output end of the first transceiver is connected to an input end of the first HMM analyzer and an input end of the voice signal processing unit.

16. The cloud-based device according to claim 14 when claim 14 cites claim 2, wherein the output end of the first transceiver is connected to one or more of input ends of the scenario HMM analyzer, the audience expression HMM analyzer, and the audience voice HMM analyzer and an input end of the voice signal processing unit.

17. The cloud-based device according to claim 14, wherein the first transceiver is in a communications connection to a second transceiver of a robot.

18. An operating method of a cloud-based device, comprising:
receiving, by using a first transceiver in the device, input data coming from a second transceiver of a robot;
receiving an audience voice input signal from the first transceiver in the device by using a voice signal processing unit in an analysis apparatus in the device, identifying the audience voice input signal, and outputting a standard instruction based on an identification result;
respectively receiving, by using a first HMM analyzer in the analysis apparatus in the device, a scenario input signal, an audience expression input signal, and an audience voice input signal that come from the first transceiver in the device, and using them as observable sequences of a first HMM;
deducing, by the first HMM analyzer, a hidden state change sequence of the first HMM based on an observable sequence probability maximization criterion, and outputting the hidden state change sequence to an emotional state HMM analyzer in the analysis apparatus, wherein the hidden state change sequence of the first HMM comprises a scenario hidden state change sequence, an audience expression hidden state change sequence, and an audience voice hidden state change sequence;
receiving, by the emotional state HMM analyzer, the scenario hidden state change sequence, the audience expression hidden state change sequence, and the audience voice hidden state change sequence, using them as observable sequences of an emotional state HMM, and deducing a hidden state change sequence of the emotional state HMM based on the observable sequence probability maximization criterion; and
selecting, by a decision apparatus in the device, humorous behavior based on the hidden state change sequence of the emotional state HMM, and consolidating a humorous behavior instruction and the standard instruction to obtain a final output instruction.

19. The method according to claim 18, wherein the first HMM analyzer further comprises a scenario HMM analyzer, an audience expression HMM analyzer, and an audience voice HMM analyzer that are connected in a series or parallel manner, wherein the scenario HMM analyzer, the audience expression HMM analyzer, and the audience voice HMM analyzer respectively receive a scenario input signal, an audience expression input signal, and an audience voice input signal; use them as observable sequences of a scenario HMM, an audience expression HMM, and an audience voice HMM; deduce hidden state change sequences of the scenario HMM, the audience expression HMM, and the audience voice HMM based on the observable sequence probability maximization criterion; and send the hidden state change sequences of the scenario HMM, the audience expression HMM, and the audience voice HMM to the emotional state HMM analyzer.

20. The method according to claim 18, wherein the step of selecting, by a decision apparatus in the device, humorous behavior based on the hidden state change sequence of the emotional state HMM, and consolidating a humorous behavior instruction and the standard instruction to obtain a final output instruction comprises:
receiving, by a humorous behavior selection unit in the decision apparatus in the device, the hidden state change sequence of the emotional state HMM, performing probability analysis on the received hidden state change sequence of the emotional state HMM, selecting the humorous behavior, and outputting the humorous behavior instruction to a consolidation unit in the decision apparatus; and
receiving, by the consolidation unit, the humorous behavior instruction and the standard instruction, and consolidating the humorous behavior instruction and the standard instruction to obtain the final output instruction.

21. The method according to claim 20, wherein the consolidation comprises:
when the humorous behavior instruction is "error feedback", the consolidation unit modifies the standard instruction based on the humorous behavior instruction, to be specific, the standard instruction is not executed, and the consolidation unit selects some other performances by searching a cloud database and/or accessing the Internet with reference to the audience voice input signal, to express a sense of humor.

22. The method according to claim 20, wherein the consolidation further comprises:
when the humorous behavior instruction is one of "telling a joke", "reading interesting news", "performing a funny action", and "singing", the consolidation unit selects an optimal humor output instruction by searching a cloud database and/or accessing the Internet with reference to the audience voice input signal, and uses the optimal humor output instruction and the standard instruction as the final output instruction, wherein the optimal humor output instruction is an instruction most matching an emotional state of a target audience.

23. The method according to claim 22, wherein a related policy for selecting the humorous behavior and the optimal humor output instruction is correspondingly adjusted by using feedback information obtained based on continuous interaction with the target audience.

24. The method according to claim 21 or 22, wherein the database comprises a joke database, a news database, an action database, and a song database.

25. The method according to claim 20, wherein the probability analysis comprises:
calculating, by the humorous behavior selection unit, humorous behavior set probability distribution by using a preset probability transition matrix from an emotional state to a humorous behavior set.

26. The method according to claim 25, wherein the humorous behavior set comprises {m1: "telling a joke", m2: "reading interesting news", m3: "performing a funny action", m4:
"singing", m5: "error feedback"}, and the m5: "error feedback" means making an audience happy by deliberately outputting error feedback.

27. The method according to claim 18, wherein deducing the hidden state change sequence based on the observable sequence probability maximization criterion is implemented by using a Viterbi algorithm.
